# EUROPEAN PATENT APPLICATION

(11) **EP 4 796 753 A1**
(43) Date of publication of application: **26.08.2026**
(21) Application number: 26154997.6
(22) Date of filing: 29.01.2026
(51) Int. Cl.: F01D 9/02

(54) **DOUBLE-SECTION SPRING ELEMENT**

(30) Priority: 06.02.2025 GB 202501710
(71) Applicant: Rolls-Royce Deutschland Ltd & Co KG, 15827 Blankenfelde-Mahlow (DE)
(72) Inventor: BRICENO, Mario, 15827 Blankenfelde-Mahlow (DE); OTT, Romek, 15827 Blankenfelde-Mahlow (DE); SCHWARZER, Erik, 15827 Blankenfelde-Mahlow (DE)

(57) **Abstract**

A spring element (1) for an elastic retention comprises: a first section (10) forming a first spring (LF) at least partially oriented along a first axis (X); and a second section (11) forming a second spring (CS) extending from the first section (11) and extending, at least partially, along a second axis (Y) perpendicular to the first axis (X), wherein the first and second sections (10, 11) are configured to elastically support a load (L) on the spring element (1).

## Description

### TECHNICAL FIELD

The present disclosure relates to a spring element for an elastic retention of another part, to a seal system with such a spring element and to a gas turbine engine with such a seal system and/or spring element.

### BACKGROUND

Springs are typically dimensioned in accordance with the respective use case. For example, the dimensions of a spring can be defined by the displacement they can be subjected to in a given direction. Therefore, a large design space is conventionally required for accommodating a spring absorbing a large displacement. However, such design space is not always available. For example, in a sealing area of a gas turbine engine, springs can be used for an elastic retention of parts, such as one or more seals, but the available space may be very limited.

Traditionally, leaf springs, flat springs, coil springs or clip springs are used particularly in aero engine sealing arrangements. Depending on the shape of the available space for the seal, and other parameters such as maximum load and the like, the best of these types of seals is typically selected.

In such and other applications with limited available space, an improvement of the elastic retention of parts is desired.

### SUMMARY

There is a need to provide an improved spring element, e.g., for applications with limited available space, which may obviate one or more of the aforementioned drawbacks or limitations in the related art, or at least provides a useful alternative to known spring elements.

According to a first aspect, a spring element (e.g., for an elastic retention of another part), is provided. The spring element comprises a first section and a second section. The first section forms a first (e.g., leaf or flat) spring. The first spring is (at least partially) oriented along a first axis and/or first plane. The second section forms a second (e.g., clip) spring. The second spring extends from the first section and extends, at least partially, along a second axis and or second plane, the second axis and/or second plane being perpendicular to the first axis and/or first plane. Each of the first and second sections may be configured to, together, elastically support a load on the spring element, in particular a load acting in a direction perpendicular to the first axis and perpendicular to the second axis.

Such a spring, which can also be referred to as double element spring, can distribute a load in two directions and therefore allows a smaller form factor to be used for large loads.

The first spring may be a flat spring or leaf spring, and the second spring may be a clip spring.

In some embodiments, the first section extends from a first end portion to a second end portion thereof. The first section is elongate. The second section may be arranged between the two end portions of the first section, or at another location. This allows an efficient design of the spring and a reliable support of the spring.

In some embodiments, the second section is arranged in the middle between the two end portions of the first section. This allows a symmetric support of a load. The first section may have a greater length along the first axis than the second section.

A fixation point, e.g., mounting hole (e.g., a first mounting hole) may be formed at (e.g., in) the first end portion. Alternatively or in addition, a fixation point, e.g., mounting hole, e.g., a second mounting hole, may be formed at (e.g., in) the second end portion. In this manner the spring can be fixed by means of a pin or the like, e.g., by means of a screw, a bolt, a rivet, etc.

In some embodiments, a middle portion of the first section is arranged in a different plane than one or both of the end portions. In particular, the middle portion may be arranged parallel and displaced to the plane of one of the end portions or to the planes of the end portions. This design allows to stretch the first section and thereby support an acting load effectively.

The middle portion may be connected with one of the end portions via a connection portion or with each of the end portions via a respective connecting portion. The connecting portion or each of the connecting portions may be bent, e.g., in two opposite directions. The connecting portions may be S-shaped. This allows the first section to be elastically stretched.

The spring element can be configured such that a load acting on a load surface of the second section in a direction along a third axis, the third axis being perpendicular to the first axis and to the second axis, is supported via the second section on the first section and via the first section on one or more restraining faces of the first section, e.g., on one or more restraining surfaces of the first and/or second end portions of the first section. This enables a particularly efficient elastic support.

The first and second sections may be configured to be elastically deformed by the load. In some embodiments, the second section is configured to be elastically compressed by the load and/or the first section is configured to be elastically stretched by the load. This allows a particularly small size of the spring element.

The spring element may be configured to elastically support a load acting on the second section via the second section, and from the second section via the first section into an external bearing surface.

The second section may be bent in two opposite directions. That is, the second section may have at least one curvature in one direction and at least one other curvature in the opposite direction. By this, the second section can effectively support a load without using a large design space.

The second section may comprise one, two, three, four or more turns. Each turn may be in the form of a U-shaped portion.

The second section may comprise a (first) U-shaped portion. This U-shaped portion may extend from the first section. The second section may comprise a second U-shaped portion that extends from the first U-shaped portion. That is, the first U-shaped portion connects the second U-shaped portion with the first section. The U-shaped portions may be oriented oppositely to one another. By means of these U-shaped portions, the second section can effectively support a load without using a large design space. As further examples, the second section may comprise a C shape, a double C shape, an S shape, an S shape and a C shape, a plurality of S shapes or the like.

The spring element may be made in one piece, e.g., by one piece of a unitary material. This allows a simple and robust construction and method of manufacturing the spring element.

The second spring may not have any holes.

The spring element may be formed of a flat piece of an elastic material such as sheet metal, in particular a metal or an alloy, e.g., spring steel or the like. This allows a simple manufacturing and a robust and effective design.

In some embodiments, a spring element is provided, e.g., according to any configuration described herein. This spring element comprises a first section and a second section. The first section is elongate and extends from a first end to a second end. The first section is oriented along a first axis. The second section may comprise at least one S, C or U-shaped portion. The second section extends from the first section and extends, at least partially, along a second axis, the second axis being perpendicular to the first axis. For example, upon action of a load, the first section is elastically stretched, the second section is elastically compressed, or vice versa.

According to a second aspect, there is provided a seal system, e.g., for a gas turbine engine or for another machine or the like. The seal system comprises a seal and the spring element according to any configuration described herein, e.g., for elastically restraining the seal.

The seal system may comprise a rear inner discharge nozzle, RIDN. The RIDN may be configured to engage a liner of a combustor. The seal system may comprise a nozzle guide vane, NGV. The NGV may be positioned adjacent the RIDN. The NGV and the RIDN may together define a cavity. It may be provided that the seal is in contact with and/or supported on the RIDN. The seal may be positioned in the cavity. The seal may curve along a surface of the cavity. The seal may contact and/or be supported against the RIDN. Alternatively or in addition, the seal may contact and/or is supported on the NGV.

The first spring may be a flat spring or leaf spring, and the second spring may be a clip spring. The seal, e.g., is supported on the second section, via the second section, and from the second section via the first section, at at least one portion (e.g., at least one end portion) of the first section.

The spring element may comprise a hook, configured to prevent tilting, in particular around the first axis. The hook may be arranged on or in the second portion of the spring element. The hook may be configured to grasp around an adjacent spring, in particular around a first portion of the adjacent spring, and/or around a tang of an RIDN.

According to a third aspect a gas turbine engine is provided. The gas turbine engine comprises the spring element according to any configuration described herein and/or the seal system according to any configuration described herein.

According to a fourth aspect, a vehicle, (e.g., an aircraft), is provided. The vehicle includes the gas turbine engine and/or the seal system and/or the spring element according to any configuration described herein. The advantages of the gas turbine engine, the seal system and the spring element described herein apply especially to a vehicle, in particular to an aircraft. However, a use in a gas pump, in a marine engine etc. are also conceivable.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Aspects and embodiments of the present disclosure will now be discussed with reference to the accompanying figures. Further aspects and embodiments will be apparent to those skilled in the art.

Embodiments will now be described by way of example with reference to the figures in which:
- FIG. 1: illustrates an aircraft having a plurality of gas turbine engines.
- FIG. 2: illustrates a cross-sectional view of an example of a portion of a gas turbine engine of FIG. 1, including a combustor seal system.
- FIG. 3: illustrates a cross-sectional view of an example of the combustor seal system of FIG. 2.
- FIG. 4: illustrates further details of an example of the combustor seal system of FIG. 2.
- FIG. 5: illustrates a perspective view of an example of the combustor seal system of FIG. 2.
- FIG. 6: depicts a front view of a spring element of the combustor seal system of FIG. 5.
- FIG. 7: depicts a side view of the spring element of FIG. 5.
- FIG. 8: depicts a top view of the spring element of FIG. 5.
- FIG. 9: illustrates a perspective view of the spring element of FIG. 5.

The following table lists the reference numerals used in the drawings with the features to which they refer:

| Ref no. | Feature | FIG. |
|---|---|---|
| 1 | Spring element | 456789 |
| 2 | Seal system | 23 |
| 3 | Gas turbine engine | 1 2 |
| 4 | Aircraft | 1 |
| 10 | First section | 67 |
| 11 | Second section | 67 |
| 30 | Compressor section | 2 |
| 31 | Combustion section | 2 |
| 32 | Turbine section | 2 |
| 33 | Rear inner discharge nozzle (RIDN) | 345 |
| 34 | Nozzle guide vane (NGV) | 345 |
| 36 | Cavity | 3 |
| 37 | Flap seal | 345 |
| 38 | Attachment pin | 345 |
| 100 | First end portion | 689 |
| 101 | Second end portion | 6789 |
| 102 | First mounting hole | 6 |
| 103 | Second mounting hole | 6 |
| 104 | Middle portion | 67 |
| 105 | First connecting portion | 69 |
| 106 | Second connecting portion | 679 |
| 107 | Restraining face | 7 |
| 108 | Hook | 78 |
| 110 | First U-shaped portion | 69 |
| 111 | Second U-shaped portion | 679 |
| 112 | Load surface | 6 |
| 310 | Combustor | 2 |
| 311 | Combustion chamber | 23 |
| 312 | Combustion rear inner casing | 2 |
| 313 | Second chamber | 2 |
| 314 | Liner | 3 |
| 315 | Inner wall | 3 |
| 316 | Outer wall | 3 |
| 317 | End wall | 3 |
| 330 | Upstream portion | 3 |
| 331 | Downstream portion | 3 |
| 334 | Groove | 3 |
| 335 | Sealing surface | 34 |
| 338 | Tang | 35 |
| 340 | Sealing surface | 4 |
| 341 | Inner platform | 3 4 |
| 342 | Stator | 3 |
| 343 | Inner wall | 34 |
| 380 | Head | 4 |
| CS | Clip spring | 68 |
| H | Height | 6 |
| L | Load | 7 |
| LF | Leaf spring | 68 |
| P | Primary flow path | 3 |
| R | Circles region | 2 |
| W | Width | 7 |
| X, Y, Z | First, second, third axis | 67 |

### DETAILED DESCRIPTION

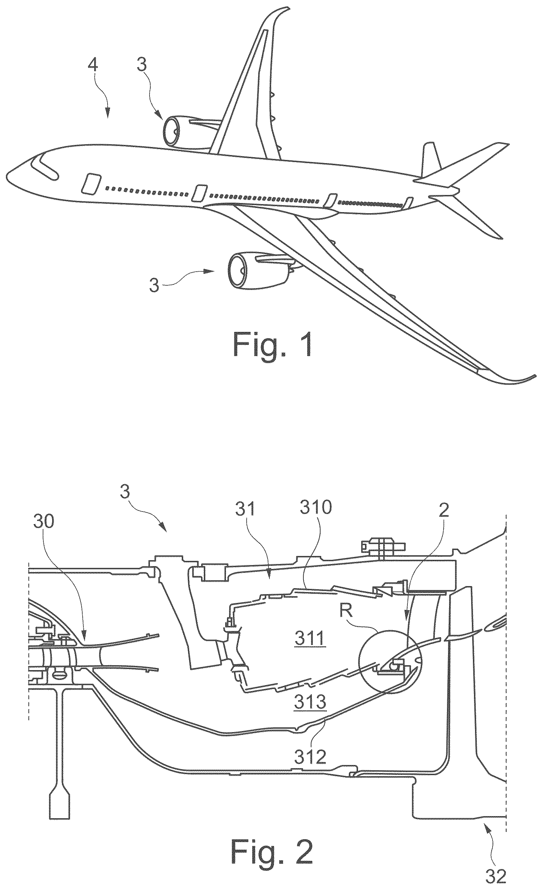

FIG. 1 shows an aircraft 4 in the form of a passenger aircraft. Aircraft 4 comprises several (here: two) gas turbine engines 3 in accordance with FIG. 2. In the example shown in FIG. 1, the aircraft 4 comprises a cabin and two wings, wherein each wing carries one of the gas turbine engines 3.

FIG. 2 shows a cross-sectional view of a portion of one of the gas turbine engines 3. In some examples as in FIG. 1, the gas turbine engine 3 supplies power to and/or provides propulsion of an aircraft such as aircraft 4. Other examples of aircrafts may include helicopters, other kinds of airplanes, space vehicles, unmanned aerial vehicles, hover crafts, and any other airborne and/or extraterrestrial vehicle. Alternatively or in addition, the gas turbine engine 3 may be utilized in a configuration unrelated to an aircraft such as, for example, an industrial application, an energy application, a power plant, a pumping set, a marine application (for example, for naval propulsion), or the like. The gas turbine engine 3 may take a variety of forms in various embodiments. Though depicted as an axial flow engine, in some forms the gas turbine engine 3 may have multiple spools and/or may be a centrifugal or mixed centrifugal/axial flow engine. In some forms, the gas turbine engine 3 may be a turboprop, a turbofan, or a turboshaft engine. Other variations are also contemplated.

The gas turbine engine 3 includes an intake section, a compressor section 30, a combustion section 31, a turbine section 31, and an exhaust section. During operation of the gas turbine engine 3, fluid received from the intake section, such as air, is compressed within the compressor section 30. The compressed fluid is then mixed with fuel and the mixture may be burned in the combustion section 31. The combustion section 31 may include any suitable fuel injection and combustion mechanisms. The hot, high pressure fluid then passes through the turbine section 32 to extract energy from the fluid and cause a turbine shaft of a turbine in the turbine section 32 to rotate, which in turn drives the compressor section 30. Discharge fluid exits the exhaust section to provide propulsion.

The combustion section 31 includes a combustor 310, which defines a combustion chamber 311. The combustor 310 and a combustion rear inner casing 312 define a second chamber 313, which contains some of the compressed fluid received from the compressor section 30. The gas turbine engine 3 includes a seal system 2 for sealing the combustor 310 of the gas turbine engine 3 positioned between the combustion section 31 and the turbine section 32. The seal system 2 prevents or limits a flow of fluid from the second chamber 313 to the combustion chamber 311.

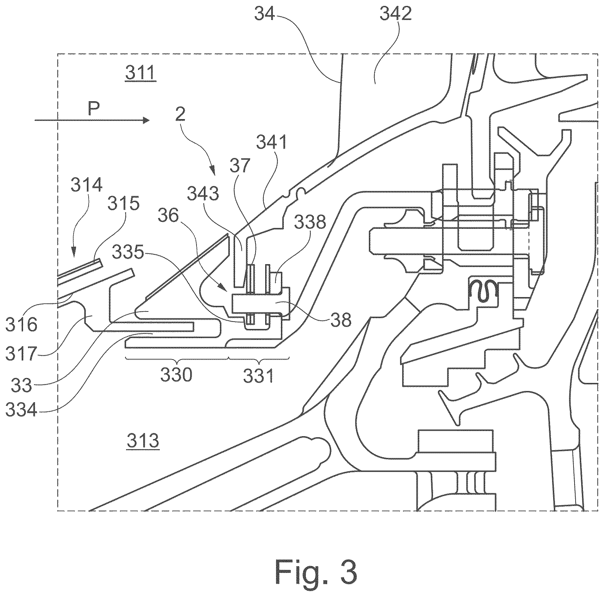

FIG. 3 illustrates in more detail the circled region labelled R in FIG. 2. In particular, FIG. 3 illustrates a cross-sectional view of parts of an example of the seal system 2 for sealing the combustor 310 of the gas turbine engine 3. The example of the seal system 2 illustrated in FIG. 3 includes a rear inner discharge nozzle (RIDN) 33, and a nozzle guide vane (NGV) 34. The RIDN 33 includes an upstream portion 330 relative to a primary flow path P of the gas turbine engine 3 and a downstream portion 331 relative to the primary flow path P of the gas turbine engine 3. The upstream portion 330 is positioned to engage a liner 314 of the combustor 310. The NGV 34 is positioned adjacent to the downstream portion 331 of the RIDN 33, where the NGV 34 and the RIDN 33 together define a cavity 36.

The liner 314 of the combustor 310 may be any wall that houses combustion of the gas turbine engine 3. In the example of FIG. 3, the liner 314 is a double-walled liner having an inner wall 315 and an outer wall 316. The inner wall 315 and the outer wall 316 are segmented. As shown in FIGS. 2 and 3, multiple segments of the inner wall 315 may be staggered with respect to multiple segments of the outer wall 316. The inner wall 315 includes clearance between each segment, and the outer wall 316 also includes clearance between each segment. Alternatively or in addition, there may be clearance between the inner wall 315 and the outer wall 316 allowing cooling fluid, such as air, to flow through the liner 314. In the shown example, the liner 314 also includes an inner end wall 317 positioned at the downstream end of the liner 314. In another example, the inner wall 315 and/or the outer wall 316 are unsegmented pieces. In yet another example, the liner 314 includes only a single wall, which may be segmented or unsegmented.

The NGV 34 may be any annular structure positioned to guide fluid, such as air, from the combustor 310 toward the turbine section 32 of the gas turbine engine 3. In the present example, the NGV 34 includes an inner platform 341, an outer platform (see FIG. 2), and a stator 342 (e.g., a blade or a plurality of blades) extending between the inner platform 341 and the outer platform. The inner platform 341 of the NGV 34 includes an inner wall 343 relative to the primary flow path P of the gas turbine engine 3.

The RIDN 33 is an annular sealing structure positioned to add radial and axial support to the liner 314 and the NGV 34. The RIDN 33 extends across a gap between the inner end wall 317 of the liner 314 and the inner platform 341 of the NGV 34. In one example, as shown in FIG. 3, the RIDN 33 includes a groove 334 in the upstream portion 330 for receiving the inner end wall 317. In other examples, the groove may be configured to receive any portion of the liner 314. The downstream portion 331 of the RIDN 33 includes a sealing surface 335 facing downstream. As shown in FIG. 3, the downstream portion 331 of the RIDN 33 includes a tang 338. In some examples, the RIDN 33 includes other positioning features. In other examples, the RIDN 33 does not include the tang 338 or other positioning features. The RIDN 33 is configured to allow both the liner 314 and the NGV 34 to move axially and radially relative to the RIDN 33. Alternatively or in addition, the RIDN 33 may be configured to move axially and radially with respect the liner 314 and/or the NGV 34.

The tang 338 extends downstream from the sealing surface 335 of the RIDN 33. The tang 338 includes a first edge extending from the sealing surface 335 and a second edge extending from the first edge. The second edge may extend towards the NGV 34. In one example, the RIDN 33 and the tang 338 may be one continuous piece. In other examples the RIDN 33 and the tang 338 may be separate pieces (e.g., fixedly) coupled together.

During operation of the seal system 2, fluid, such as air flows in the direction of the primary flow path P from the compressor section 30, through the combustion section 31, toward the turbine section 32. In some examples, there may be a pressure differential between the combustion chamber 311 and the second chamber 313, where the combustion chamber 311 has a lower pressure than the second chamber 313. Because of the pressure differential between the combustion chamber 311 and the second chamber 313, the fluid is urged from the second chamber 313 toward the combustion chamber 311. The fluid may flow along the RIDN 33 and/or the NGV 34 toward the cavity 36.

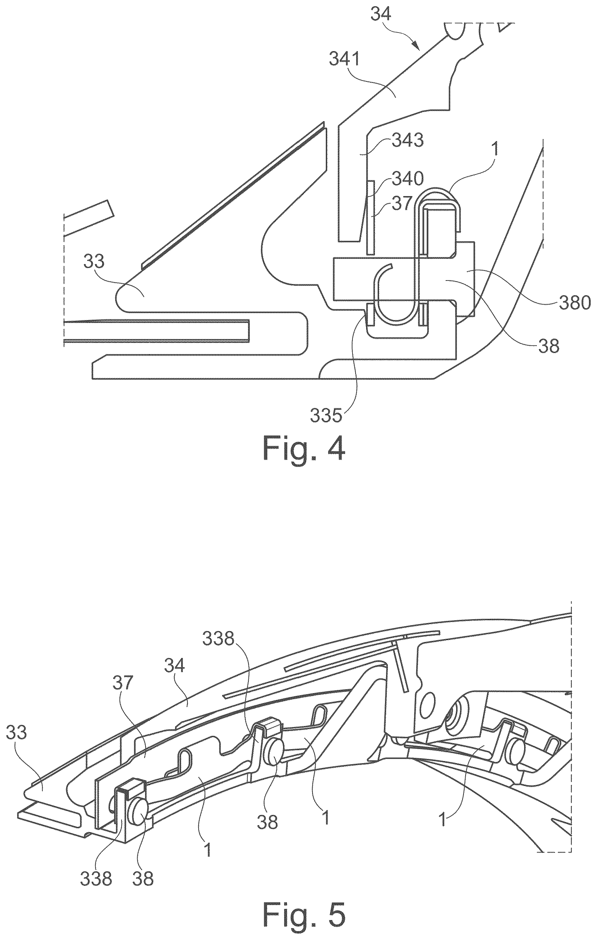

FIG. 4 illustrates an example of the seal system 2 that includes a flap seal 37, and that further includes a spring element which is also referred to as spring 1 for brevity, and an attachment pin 38. The spring 1 may be positioned downstream of the flap seal 37, and the attachment pin 38 may extend through the spring 1 and the flap seal 37, coupling the spring 1 and the flap seal 37 to the NGV 34.

The flap seal 37 may be any other seal or structure extending between the downstream portion 331 of the RIDN 33 and the NGV 34. The flap seal 37 may further prevent and/or limit the flow of air between the combustion chamber 311 and the second chamber 313. The flap seal 37 may be positioned to contact a sealing surface 340 of the NGV 34 and the sealing surface 335 of the RIDN 33. The flap seal 37 directly contacts the RIDN 33. The flap seal 37 directly contacts the NGV 34. The sealing surfaces 335, 340 of the RIDN 33 and the NGV 34 are aligned in the same plane. Each of the sealing surfaces 335, 340 of the RIDN 33 and the NGV 34 may be annular.

The spring 1 is configured to keep the flap seal 37 in contact with the NGV 34 and the RIDN 33. The spring 1 may be positioned between the flap seal 37 and a head 380 of the attachment pin 38. In the present example, the spring 1 contacts the flap seal 37 and the tang 338.

The attachment pin 38 may be any fastener configured to couple the spring 1 and/or the flap seal 37 to the NGV 34. The attachment pin 38 may include the head 380 and a shaft extending upstream from head 380 and through the spring 1 and the flap seal 37 (or only through the spring 1). In some examples, such as is shown in FIG. 4, the flap seal 37 extends along a length of the second edge of the tang 338. The head 380 of the attachment pin 38 contacts the second edge of the tang 338 directly.

During operation of the seal system 2, as the RIDN 33 and the NGV 34 move radially and/or axially, the spring 1 applies a force to the flap seal 37 causing the flap seal 37 to keep constant contact with the RIDN 33 and the NGV 34. The flap seal 37 prevents fluid to move into the cavity 36, preventing and/or limiting a flow of the fluid into the combustion chamber 311.

As shown in FIG. 5, the seal system 2 includes a plurality of springs 1. The springs 1 overlap with each other. Two adjacent springs 1 overlap with each other at a common tang 338.

In another example, an assembly, e.g., a seal system 2, may be provided including the RIDN 33, the NGV 34, and the flap seal 37. The RIDN 33 may include the upstream portion 330 and the downstream portion 331 relative to the primary flow path P of the gas turbine engine 3. The NGV 34 may be positioned adjacent to the RIDN 33. The RIDN 33 and the NGV 34 together may define the cavity 36. The flap seal 37 may be positioned in the cavity 36. The flap seal 37 contacts the RIDN 33 at sealing surface 335, and the flap seal 37 contacts the NGV 34 at the sealing surface 340. The spring 1 retains the flap seal 37 against the NGV 34 and/or the RIDN 33.

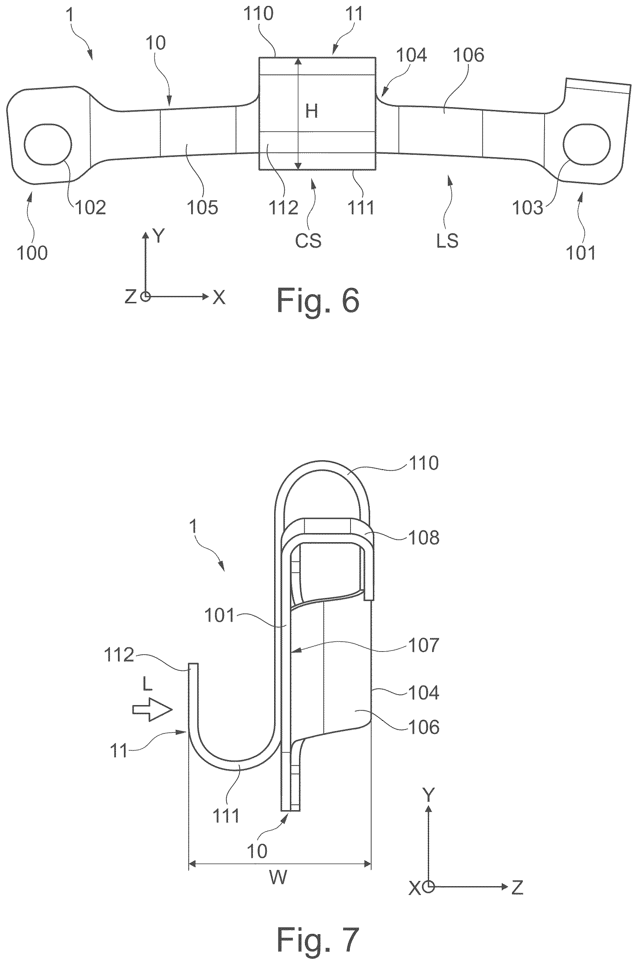

Turning now to FIGS. 6 to 9, the spring element, spring 1, for the seal system 2 of the gas turbine engine 3 will be described. Notably, the use of the spring 1 is not limited to the application in the seal system 2 or a gas turbine engine 3, but it may also be used in other applications, particularly applications with constraints on available space and/or high loads.

The spring 1 comprises a first section 10 that forms and acts as a (first) flat or leaf spring LF. The first section is oriented along a first axis X. The first section is oriented along a first plane XY defined by the first axis X and a second axis Y. The first section 10 is elongate and extends, along the first axis X, from a first end portion 100 to a second end portion 101.

The spring 1 further comprises a second section 11 that forms and acts as a (second) clip spring CS. The second section 11 describes the shape of a clip. The second section 11 is directly connected with the first section 11 and extends from the first section 11. The second section 11 extends in parts along the second axis Y which is perpendicular to the first axis X. The second section 11 also extends in parts along a third axis Z which is perpendicular to the first axis X and to the second axis Y.

The second section 11 is arranged between the two end portions 100, 101 of the first section 10. More specifically, the second section 11 is arranged in the middle between the first and second end portions 100, 101 of the first section 10.

The first section 10 further comprises a middle portion 104. The middle portion 104 is arranged between the two end portions 100, 101 of the first section 10. The middle portion 104 is planar, but could also be bent. The middle portion 104 is arranged in a different plane than the first and second end portions 100, 101. More specifically, the middle portion 104 is arranged parallel to and displaced to the planes of the end portions 100, 101. The end portions 100, 101 may be in the same plane or in different planes. The middle portion 104 is connected with each of the end portions 100, 101 via a respective connecting portion 105, 106. In order to provide the displacement of the plane of the middle portion 104, each of the connecting portions 105, 106 is bent. Specifically, each of the connecting portions 105, 106 is bent in two opposite directions (in one direction at one location thereof and in the other direction at another location). This bending provides the offset of the middle portion 104 relative to the end portions 100, 101. Here, the middle portion 104 is offset relative to the end portions 100, 101 along the third axis Z.

To fix the spring 1 to another part, e.g., to the RIDN 33 or the NGV 34, e.g., using pins such as the attachment pins 38, the spring 1 comprises two fixation points. This allows to avoid a rotation of the spring 1 and can prevent release of the spring if one of the fixation points is released. The fixation points are displaced from one another. Here, the two fixation points are displaced with respect to one another along the first axis X. In the present example, a first mounting hole 102 is formed in the first end portion 100 and a second mounting hole 103 is formed in the second end portion 101 of the first section 10. The end portions 100, 101 have a larger extension than the connecting portions 105, 106 along the second axis.

In the depicted example, the second section 11 has an alternating shape. Here, the second section 11 extends from the first section 10 along the second axis Y, then has a bending towards third axis Z until it further extends again along the second axis Y (but in the opposite direction as before). This bending is around an axis parallel to the first axis X. Then, the second section 11 has another bending, again towards the third axis Z until it further extends again along the second axis Y, in the same direction as it started from the first section 10, until an end of the second section 11. The second section, thus, is bent in two opposite directions and comprises a first U-shaped portion 110 that extends from the first section 10 and a second U-shaped portion 111 that extends from the first U-shaped portion 110 until the end of the second portion 11. A first leg or the first U-shaped portion 110 connects the second section 11 with the first section 10. The other leg of the first U-shaped portion 110 connects the first U-shaped portion 110 with a first leg of the second U-shaped portion 111. The other leg of the second U-shaped portion 111 forms the open end of the second section 11.

The second section 11 has an extension along the first axis X which, in the present example, is constant over its extension in the other directions +/- 10% or +/- 5%.

The second section 11 has a double-hook shape. Alternatively, the second section 11 can have just one hook, or three or more hooks.

The second section 11 comprises a load surface 112 configured to receive a load L. The first section 10 comprises restraining faces 107 configured to rest against a part to which the spring 1 is fixed using the mounting holes 102, 103. Here the restraining faces 107 are formed by surfaces of the end portions 100, 101 of the first section 10 (oriented oppositely to the load surface 112). Along the first axis X, the load surface 112 is arranged between the mounting holes 102, 103. This allows to avoid tilting of the spring 1.

When the load L acts on the load surface 112 of the second section 11 in a direction along the third axis Z, the load L is supported via the second section 11 on the first section 10 and further via the first section 10 and via the restraining faces 107 of the first and second end portions 100, 101 of the first section 10 on the part on which the restraining faces 107 are mounted. Thereby, the second section 11 is elastically compressed by the load L and the first section 10 elastically stretched by the load L. Due to the combination of sections 10, 11, the load can be supported elastically using a particularly small space. The double spring 1 is compact in terms of width W and height H while maximizing displacement absorption. The vertical second section (along the second axis Y) acts as the clip spring CS while the horizontal first section (along the first axis X) acts like the flat or leaf spring LF. The load L is shared through the whole spring 1, making it more efficient than a pure flat/leaf spring or clip/coil spring. The load surface 112 for the load application can be moved along the second axis X (e.g., by forming and/or dimensioning the second section 11 accordingly) to fit the required arrangement and the clip spring CS bends also can be exchanged and even increased. The more bends the higher displacement can be taken by the spring 1 without exhibiting areas with plastic deformation.

Hence, the first and second sections 10, 11 are configured to elastically support the load L on the spring 1. More specifically, the first and second sections 10, 11 are configured to elastically support the load L acting on the spring 1 parallel to the third axis Z.

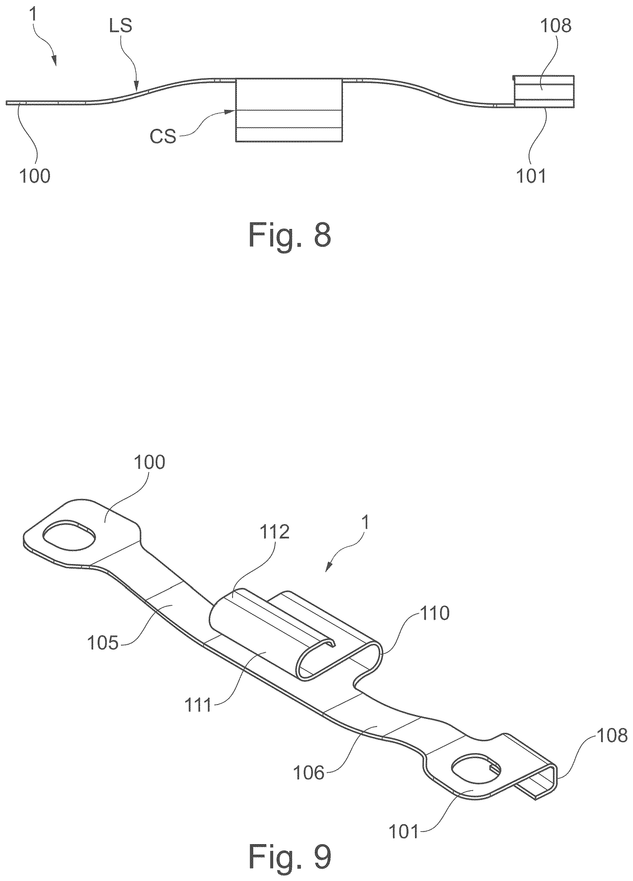

The width W of the spring 1 along the third axis Z is larger than the distance of the load surface 112 to the one or more (here: two) restraining face(s) 107 along the third axis Z, see FIG. 7. The open end of the second section 11 (at the load surface 112) may be in the same plane as the load surface 112, as shown in FIG. 7, or it may be bent inwards, such as shown in FIG. 9, e.g., for an additional protection of the seal (e.g., flap seal 37).

The end portions 100, 101 can be formed symmetrically or differently. Here, as an example, the second end portion comprises a hook 108 (while the first end portion 100 does not). As shown particularly in FIGs. 4 and 5, a first end portion 100 of one spring 1 overlaps with a second end portion 101 of an adjacent spring 1. The hook 108 grasps around the first end portion 100 and around the tang 338, and may contribute to avoid tilting of the spring 1, in particular around the third axis Z.

In the present example, the spring 1 is made in one piece, e.g., by stamping and bending. The spring 1 is formed by a flat piece of an elastic material, in particular spring steel, which is bent to have the described shape.

Here, the first section 10 is a horizontal section and the second section is a vertical section. The vertical (Y) section acts as a clip spring and the horizontal (X) section acts as a flat or leaf spring. The spring 1 is retained along the Z-axis by one or more restraining faces 107. The spring 1 is restrained along the X and Y axes by pins placed in pin holes (mounting holes 102, 103). The vertical and horizontal sections act as independent springs.

Between the two end portions 100, 101, the first section 10 is free of any hooks. Between the two end portions 100, 101, the first section 10 does not form a U. The two end portions 100, 101 may be arranged in the same plane. As can be seen, e.g., in Fig. 8, between the two end portions 100, 101, the first section 10 has no curvature larger than 90 degrees (in the present example no curvature larger than 45 degrees, more specifically, no curvature larger than 30 degrees). The second section 11 is bent in two opposite directions, in each case by more than 90 degrees, in the present example in each case by 180 degrees (or, e.g., by 180 degrees +/- 10 or 20 degrees).

The disclosure is not limited to the embodiments described above, and various modifications and improvements may be made without departing from the concepts described here. Any of the features may be used separately or in combination with any other features, unless they are mutually exclusive, and the disclosure extends to and includes all combinations and sub-combinations of one or more features that are described herein.

It is to be understood that the elements and features recited in the appended claims may be combined in different ways to produce new claims that likewise fall within the scope of the present disclosure. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

While the present disclosure has been described above by reference to various embodiments, it may be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. A spring element (1) for an elastic retention, comprising:
- a first section (10) forming a first spring (LF) at least partially oriented along a first axis (X); and
- a second section (11) forming a second spring (CS) extending from the first section (11) and extending, at least partially, along a second axis (Y) perpendicular to the first axis (X),
wherein the first and second sections (10, 11) are configured to elastically support a load (L) on the spring element (1).

2. The spring element (1) of claim 1, wherein the first spring (LF) is a flat spring or leaf spring, and the second spring (CS) is a clip spring.

3. The spring element (1) of claim 1 or 2, wherein the first section (10) extends from a first end portion (100) to a second end portion (101) thereof, wherein the second section (11) is arranged between the two end portions (100, 101) of the first section (10).

4. The spring element (1) of claim 3, wherein the second section (11) is arranged in the middle between the two end portions (100, 101) of the first section (10); and/or wherein a first mounting hole (102) is formed at the first end portion (100) and a second mounting hole (103) is formed at the second end portion (101).

5. The spring element (1) of any of claims 3 or 4, wherein a middle portion (104) of the first section (10) is arranged in a different plane than the end portions (100, 101), in particular parallel and displaced to the plane or planes of the end portions (100, 101);
wherein, optionally, the middle portion (104) is connected with each of the end portions (100, 101) via a respective connecting portion (105, 106), wherein each of the connecting portions (105, 106) is bent in two opposite directions.

6. The spring element (1) of any of claims 3 to 5, wherein a load (L) acting on a load surface (112) of the second section (11) in a direction along a third axis (Z), the third axis (Z) being perpendicular to the first axis (X) and to the second axis (Y), is supported via the second section (11) on the first section (10) and via the first section (10) on restraining faces (107) of the first and second end portions (100, 101) of the first section (10);
wherein, optionally, the second section (11) is configured to be elastically deformed, e.g., compressed or stretched, by the load (L) and the first section (10) is configured to be elastically deformed, e.g., stretched or compressed, by the load (L).

7. The spring element (1) of any of the preceding claims, wherein the spring element (1) is configured to elastically support a load (L) acting on the second section (11) via the second section (11), and from the second section (11) via the first section (10) into an external bearing surface.

8. The spring element (1) of any of the preceding claims, wherein the second section (11) is bent in two opposite directions.

9. The spring element (1) of any of the preceding claims, wherein the second section (11) comprises one, two or more turns, e.g., in the form of U-shaped portions (110);
wherein, optionally, the second section (11) comprises at least a first U-shaped portion (110) that extends from the first section (10) and a second U-shaped portion (111) that extends from the first U-shaped portion (110).

10. The spring element (1) of any of the preceding claims, wherein the spring element (1) is made in one piece and/ or wherein the second spring (CS) does not have any holes.

11. The spring element (1) of any of the preceding claims, wherein the spring element (1) is formed of a flat piece of an elastic material, in particular a metal or a metal alloy, for example spring steel.

12. A seal system (2) for a gas turbine engine (3), comprising a seal (37) and the spring element (1) of any of the preceding claims for elastically restraining the seal (37).

13. The seal system (2) of claim 12, further comprising:
- a rear inner discharge nozzle, RIDN (33), configured to engage a liner (314) of a combustor (310);
- a nozzle guide vane, NGV (34), positioned adjacent the RIDN (33), wherein the NGV (34) and the RIDN (33) together define a cavity (36).

14. The seal system (2) of claim 12 or 13, wherein the first spring (LF) is a flat spring or leaf spring, and the second spring (CS) is a clip spring, wherein the seal (37) is supported on the second section (11), via the second section (11), and from the second section (11) via the first section (10), at at least one portion (100, 101) of the first section (10).

15. A gas turbine engine (3), comprising the spring element (1) of any of claims 1 to 11 and/or the seal system (2) of any of claims 12 to 14.
